# EUROPEAN PATENT APPLICATION

(11) **EP 2 131 278 A1**
(43) Date of publication of application: **09.12.2009**
(21) Application number: 09275019.9
(22) Date of filing: 31.03.2009
(51) Int. Cl.: G06F 9/48

(54) **Scheduling of multiple tasks in a system including multiple computing elements**

(30) Priority: 02.06.2008 US 131173
(71) Applicant: Mobileye Technologies Ltd, Nicosia (IL)
(72) Inventor: Navon, Mois, Efrat 90435 (IL); Rushinek, Elchanan, Newe-Yaraq 49945 (IL); Sixou, Emmanuel, Jerusalem 97823 (IL); Pann, Arkady, Mazkeret Batya (IL); Krenin, Yossi, Jerusalem 93585 (IL)
(74) Representative: Jehan, Robert

(57) **Abstract**

A method for controlling parallel process flow in a system including a central processing unit (CPU) attached to and accessing system memory, and multiple computing elements. The computing elements (CEs) each include a computational core, local memory and a local direct memory access (DMA) unit. The CPU stores in the system memory multiple task queues in a one-to-one correspondence with the computing elements. Each task queue, which includes multiple task descriptors, specifies a sequence of tasks for execution by the corresponding computing element. Upon programming the computing element with task queue information of the queue, the task of the task queue in system memory are accessed. The task descriptors of the task queue are stored in the local memory of the computing element. The accessing and the storing of the data by the CEs is performed using the local DMA unit. When the tasks of the task queue arf executed by the computing element, the execution is typically performed in parallel by at least two of the computing elements. The CPU is interrupted respectively by the computing elements only upon their fully executing the tasks of their respective task queues.

## Description

### FIELD AND BACKGROUND

The present invention relates to a digital signal processing system including a central processing unit (CPU) and multiple computing elements performing parallel processing and a method of controlling the flow of the parallel processing by the multiple computing elements.

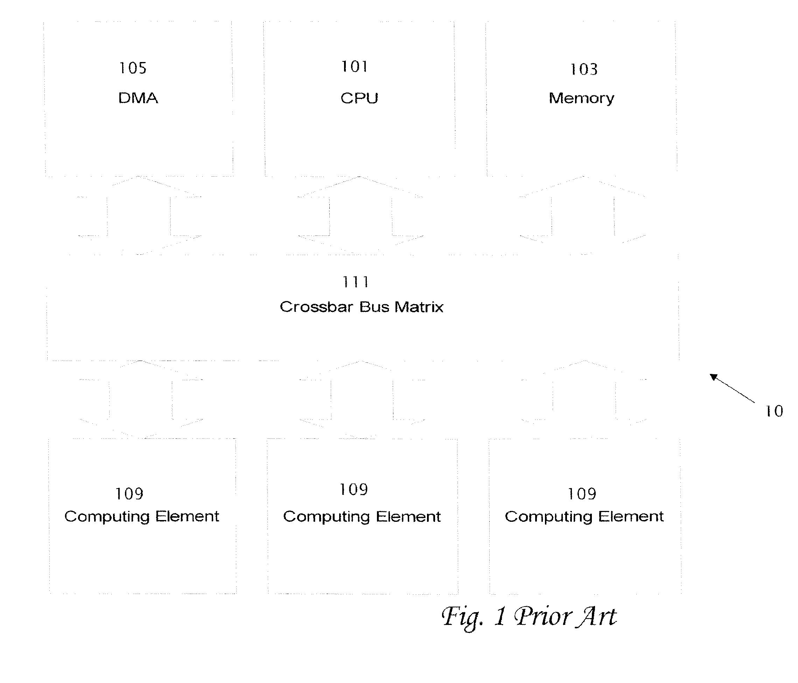

Reference is now made to Figure 1 which illustrates a conventional system **10** including a CPU **101** and multiple computing elements **109** connected by a crossbar matrix **111.** System **10** includes shared memory **103** and a shared direct memory access (DMA) unit **105** for accessing memory **103.** Alternatively, conventional system **10** may be configured with a bus and bus arbiter instead of crossbar matrix **111.** When CPU **101** runs a task on one of computing elements **109,** CPU **101** transfers to computing element **109** a task descriptor including various parameters specifying the task, and then instructs computing element **109** to start processing the task. CPU **101** similarly transfers task descriptors to other computing elements **109** and instructs them execute their respective tasks. CPU **101** then monitors the completion status of each computing element **109** in order to obtain the respective results and prepares further tasks, on a task by task basis, for each computing element **109.** Such a control flow performed by CPU **101** includes considerable administrative overhead: moving data, *e.g.* task descriptors and results, and polling status of tasks. Furthermore, since for a typical application CPU **101** has its own independent tasks for execution based on results generated by one or more of computing elements **109,** CPU **101** is often waiting for various tasks to be completed.

When DMA unit **105** is used, the task of moving the descriptors from memory **103** to computing elements **109** would be accomplished by DMA unit **105.** However, while overall system performance is marginally improved, CPU **101** is still performing administrative tasks, such as polling status of execution.

In another conventional control flow process, in system **10,** DMA unit **105** is multichannel serving multiple computing elements **109** using interrupt handling. CPU **101** stores tasks in system memory **103.** DMA **105** is programmed regarding which tasks relate to which interrupt from the computing elements **109.** CPU **101** programs DMA **105** with a linked list of tasks so that DMA **105** writes the upcoming task to computing element **109** upon receiving the appropriate interrupt from the computing element **109** indicating its readiness to execute. In such a system, multiple computing elements **109** are handled sequentially each following the appropriate DMA interrupt.

There is thus a need for, and it would be highly advantageous to have, a system including a CPU and multiple computing elements and method for managing the flow of processing between the CPU and in parallel among multiple computing elements while minimizing management overhead of the CPU.

The term "accessing" is used herein referring to memory and includes reading from and/or storing (i.e. writing) in the memory.

### BRIEF SUMMARY

The present invention seeks to provide an improved method and system for scheduling tasks in a system having a plurality of computing elements.

According to an aspect of the present invention, there is provided a method as specified in claim 1.

The preferred embodiment provides a method for controlling parallel process flow in a system including a central processing unit (CPU) attached to and accessing system memory, and multiple computing elements. The computing elements (CEs) each include a computational core, local memory and a local direct memory access (DMA) unit. The local memory and the system memory are accessible by the computational core using the local DMA units. The CPU stores in the system memory multiple task queues in a one-to-one correspondence with the computing elements. Each task queue, which includes multiple task descriptors, specifies a sequence of tasks for execution by the corresponding computing element. Upon programming the computing element with task queue information, the task descriptors of the task queue in system memory are accessed by the local DMA unit which then stores the task descriptors in the local memory of the computing element.

When the tasks of the task queues are executed by the various computing elements, the execution is typically performed in parallel by at least two of the computing elements. The CPU is interrupted respectively by the computing elements only upon fully executing the tasks of the respective task queues. Any results of the execution are preferably stored in the system memory by the local DMA unit of the computing element.

The local memory of a computing element typically has insufficient capacity for storing simultaneously all the task descriptors of the task queue. Access to, and the execution of, the task queue are performed portion-by-portion. When a CE executes one or more tasks of the task queue, the CE then stores the generated execution results in the locations of the local memory which were just previously used to store the task descriptor just executed. When all the tasks within the portion of the task queue brought into the CE have been executed, the local DMA unit then transfers out all the corresponding results to the system memory in an area indicated by the task queue information result queue pointer.

When the task queue is part of a batch of task queues for execution by the computing element, the task queue information preferably includes a pointer to the next queue in the batch. Typically, each of the computing elements have attached control registers. The control registers are loaded with the task queue information regarding the task queue. The task queue information is preferably organized in a data structure which preferably contains: (i) the number of tasks in the task queue, and (ii) a pointer in system memory to where the task descriptors reside. The task queue information preferably also includes: (iii) a results queue pointer which points to a location in system memory to store results of the execution.

According to another aspect of the present invention, there is provided a system as specified in claim 7.

The preferred embodiment provides a system including a central processing unit (CPU), a system memory operatively attached to and accessed by the CPU, and computing elements. The computing elements each include a computational core, local memory and a local direct memory access (DMA) unit. The local memory and the system memory are accessible by the computational core using the local DMA units. The CPU stores in the system memory multiple task queues in a one-to-one correspondence with the computing elements. Each task queue includes multiple task descriptors which specify a sequence of tasks for execution by the computing element. Upon programming the computing element with task queue information, and thereby starting execution, the task descriptors of the task queue are accessed in system memory using the local DMA unit of the computing element. The task descriptors of the task queue are stored in local memory of the computing element using the CE's local DMA unit. The tasks of the task queues are executed by the various computing elements such that, typically, at least two of the computing elements process their respective task queues in parallel. The CPU is interrupted by the computing elements only upon fully executing the tasks of their respective task queues. Typically, each of the computing elements have attached control registers. The control registers are loaded with the task queue information regarding the task queue. The task queue information is preferably organized in a data structure which preferably contains: (i) the number of tasks in the task queue, and (ii) a pointer in system memory to where the task descriptors reside. The task queue information preferably also includes: (iii) a results queue pointer which points to a location in system memory to store results of the execution.

According to yet another aspect of the present invention there is provided an image processing system as specified in claim 10.

The preferred embodiment provides an image processing system including a central processing unit (CPU), a system memory operatively attached to and accessed by the CPU, and computing elements. The computing elements each include a computational core, local memory and a local direct memory access (DMA) unit. The local memory and the system memory are accessible by the computational core using the local DMA units. The CPU stores in the system memory multiple task queues in a one-to-one correspondence with the computing elements. Each task queue includes multiple task descriptors which specify a sequence of tasks for execution by the computing element. Upon programming the computing element with task queue information of the task queue, thereby starting execution, the task descriptors of the task queue are accessed in system memory using the local DMA unit of the computing element. The task descriptors of the task queue are stored in local memory of the computing element using the local DMA unit of the computing element.

The tasks of the task queue are executed by the computing element and, typically, at least two of the various computing elements process their respective task queues in parallel. The CPU is interrupted by the computing elements only upon fully executing the tasks of their respective task queues.

One computing element is programmed to classify an image portion of one of the image frames as an image of a known object and another computing element is programmed to track the image portion in real time from the previous image frame to the present image frame.

Preferably other (two or more) computing elements are each programmed for one or more of: receiving the image frames and storing the image frames in real-time in the system memory; image generation at reduced resolution of the image frames; real-time stereo processing of the multiple image frames simultaneously with another set of multiple image frame; real-time spatial filtration of at least a portion of one of the image frames; and real-time object classification according to a given set of object templates.

The computing elements are preferably implemented as in an application specific integrated circuit (ASIC).

The foregoing and/or other aspects will become apparent from the following detailed description when considered in conjunction with the accompanying drawing Figures.

### BRIEF DESCRIPTION OF THE DRAWINGS

Embodiments of the present invention are described below, by way of example only, with reference to the accompanying drawings, wherein:
FIG. 1 is a system drawing of a conventional system of the prior art;
FIG. 2 is a simplified block diagram of a system according to an embodiment of the present invention;
FIG. 3 is a simplified flow chart of a method for managing parallel execution of tasks, according to an embodiment of the present invention;
FIG 3A illustrates control registers storing a data structure in accordance with embodiments of the present invention;
FIG. 4 is a simplified flow chart of another method for managing parallel execution of tasks, according to an embodiment of the present invention;
FIG. 4A illustrates the task and result queue data structures as well as the "task queue information" according to the embodiment of the present invention of Figure 4;
FIG. 5 illustrates the task and result queue data structures as well as the "task queue information" according to the embodiment of the present invention of Figure 3; and
FIG. 6 is a flow diagram of parallel processing in an image processing system, according to an embodiment of the present invention.

### DETAILED DESCRIPTION

It should be noted, that although the discussion herein relates to a system including multiple processors, *e.g*. CPU and computational elements on a single die or chip, the present invention may, by non-limiting example, alternatively be configured as well using multiple processors on different dies packaged together in a single package or discrete processors mounted on a single printed circuit board.

Before explaining embodiments of the invention in detail, it is to be understood that the invention is not limited in its application to the details of design and the arrangement of the components set forth in the following description or illustrated in the drawings. The invention is capable of other embodiments or of being practiced or carried out in various ways. Also, it is to be understood that the phraseology and terminology employed herein is for the purpose of description and should not be regarded as limiting.

By way of introduction, a principal intention of the described embodiments is to improve the performance of a processing system including a CPU and multiple computing elements in which the CPU performs general algorithm flow tasks as well as attendant managerial tasks while the multiple computing elements perform, in parallel, various computation tasks including computation intensive processing. An improvement of performance is achieved by significantly reducing the managerial activity of the CPU - *e.g*., monitoring, polling, and/or interrupt handling by the CPU and/or DMA.

A preferred embodiment of the present invention referred to herein is intended for image processing of multiple image frames in real time in a vehicle control system. While the discussion herein is directed towards application to real time image processing, the principles taught herein may be readily adapted for use with other digital signal processing systems as well. Other preferred embodiments may be applied by skilled persons in the arts to other signal processing applications such as speech and/or voice recognition, and digital signal processing of communications signals.

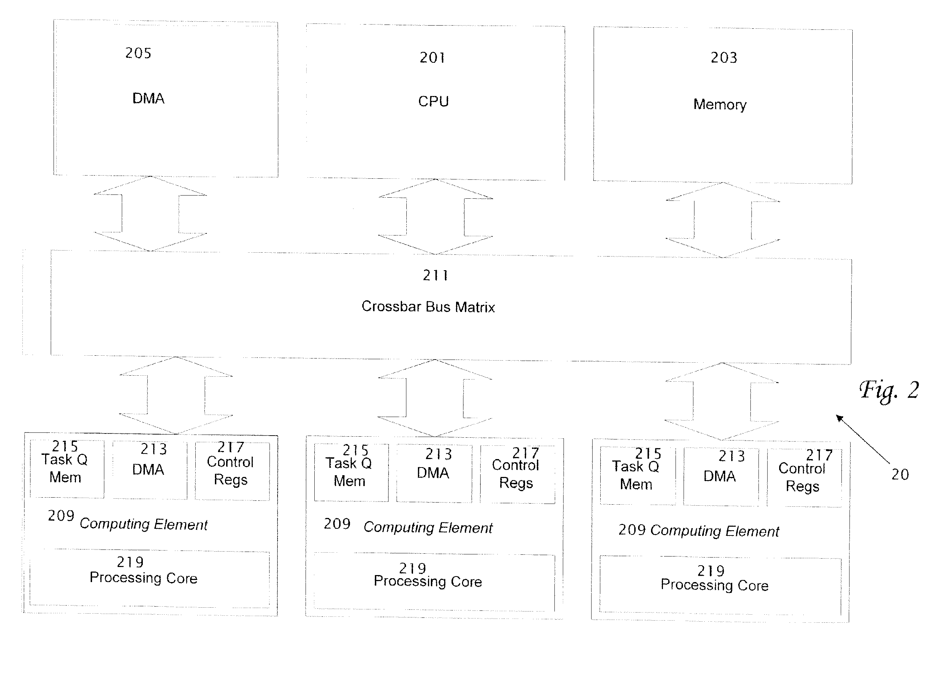

Referring now to the drawings, Figure 2 shows a simplified block diagram of a system **20,** according to an embodiment of the present invention. System **20** includes a CPU **201** attached to a direct memory access unit **205,** memory **203** and multiple computational elements **209** through a crossbar bus matrix **211.** Within each computing element **209** is a processing computational core **219,** a direct memory access (DMA) unit **213,** local memory **215** and control registers **217.**

Each task that computational core **219** executes has an associated task descriptor which contains the various parameters which define the task, *e.g*. command and operands. In order to efficiently supply tasks to computing element **209,** task queues for each computing element **209** are stored locally in memory **215.** The task queue stored in local memory **215,** and executed by the computing element **209** is known as the short task queue since it is only a part of the full list of tasks CPU **201** has prepared in system memory **203,** for execution by computing element **209.** The full list of tasks prepared by CPU **201** for execution by computing element **209** is known herein as the "long queue" which is typically stored in system memory **203.**

There are several ways to load local memory 215 with a short queue of tasks for each computing element **209,** according to different embodiments of the present invention.

One method, according to an embodiment of the present invention, is to have CPU **201** write individually the task descriptors directly into local memory **215** for each of computing elements **209.**

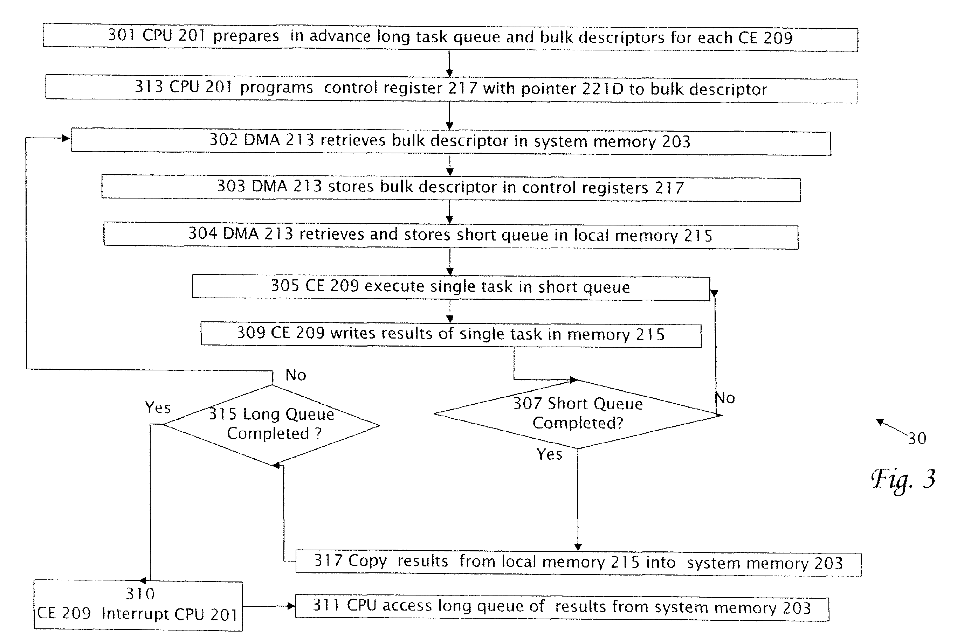

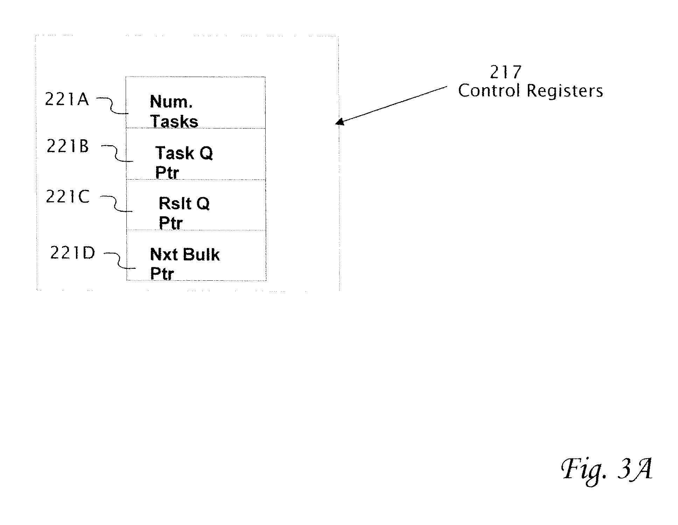

Reference is now made to Figure 3 which includes a simplified flow chart of a method **30,** known herein as "batch mode", for managing parallel execution of tasks by loading a batch of task descriptors into memory **215,** according to an embodiment of the present invention. In step **301,** CPU **201,** prepares, in advance, several long queues of tasks which need to be executed respectively by each computing element **209.** The long queues are stored in system memory **203** along with task queue information referencing the long queues. Computing element **209** handles the long queue of tasks portion-by-portion, each portion being the size of its short queue, which is typically much shorter than the long queue of tasks prepared (step **301)** by CPU **201.** Reference is now also made to Figure 3A illustrating control registers **217** storage of a data structure **221,** known herein as a "bulk descriptor", which includes the task queue information referencing the long queues, according to an embodiment of the present invention.

In order to allow for computing element **209** to handle a long queue of tasks though it can only store a limited number of tasks (i.e., the size of its short queue, which is typically much shorter than the long queue of tasks prepared (step **301)** by CPU **201,** bulk descriptor **221** specifies details about the long queue. Bulk descriptor **221** is used by DMA **213** to retrieve all the tasks in the long queue, by retrieving from memory **203** and storing in memory **215** (multiple times) a number of tasks less than or equal to the length of the short queue.

Bulk descriptor **221** preferably includes the following four fields:
**221A:** Number of Tasks: indicates the number of tasks in the long queue;
**221B:** Task queue pointer : contains the address of the first task Descriptor;
**221C:** Result queue pointer : contains the address of the first Result Descriptor; and
**221D:** Next Bulk descriptor pointer: a pointer to the next bulk descriptor 221.

Referring back to Figure 3, CPU **201** then programs (step **313)** the control registers **217** of each computing element **209** with pointer **221D** to its first bulk descriptor **221.** The DMA unit **213** within computing element **209** automatically initiates access to system memory **203,** retrieving (step **302)** and storing (step **303)** the first bulk descriptor **221** in control registers **217.** Then, in step **303,** based on bulk descriptor **221** values in control registers **217,** DMA unit **213** retrieves a short queue of tasks from within the long queue in system memory **203** and stores (step **304)** the short queue in the local memory **215.** Computing element **209** then executes (step **305)** the first task in the short queue. Upon completion (step **305)** of a task, computational core **219** writes the results (step **309)** of the task in a result descriptor, typically overwriting in local memory **215** the task descriptor of the task just executed. Thus, when computing element **209** is instructed by CPU **201** to begin execution, the local memory **215** is preferably full of a short queue of task descriptors, whereas at the end of execution (decision box **307),** local memory **215** is preferably full of a short queue of result descriptors.

When the execution of the short queue is completed (decision block **307),** the results are preferably written (step **317)** by DMA **213** from local memory **215** to system memory **203.** Once the short queue has been completed, computing element **209** checks if the long queue has been completed (decision box **315).** If there are still further tasks in the long queue, DMA **213** then retrieves (step **302)** the next bulk descriptor **221** and subsequently the related short queue of tasks from system memory **203** is retrieved and stored in local memory (step **304).** If the long queue has been fully executed (decision box **315**), computing element 209 interrupts (step **310)** CPU **201** to indicate that the long queue is fully processed and that the results may be accessed (step **311**). CPU **201** accesses (step **311**) the results from system memory **203** either directly or through system DMA **205.** Alternatively, in the case that CPU **201** programmed computing element **209** to execute only one short queue of tasks, accessing results (step **311)** may be performed directly by CPU **201** accessing memory **215.**

DMA **213** inputs tasks from memory **203** starting from task queue pointer **221B** to store (step **304)** a number of tasks, *e.g*. typically 8 tasks, within the capacity of memory **215)** after which computing element **209** starts processing (step **305)** the tasks of the retrieved short queue. The process of retrieving (step **302)** and storing (step **303)** bulk descriptors, retrieving a short queue of tasks from system memory **203** and storing (step **304)** the short queue, executing (step **305)** tasks, and writing (step **309)** the results into memory **215,** repeats until all tasks in the long queue have been exhausted. Following completion of the long queue, CPU **201** is notified (step **310**),* via interrupt, that the bulk processing has been completed.

By employing DMA **213** in each computing element **209,** CPU **201** can schedule (step **301)** the task queues in advance, and then program each CE's control register **217** bulk descriptor pointer **221D,** thus signaling each computing element's **209** local DMA unit **213** to start task retrieval (step **304)** and subsequent computing element task execution (step **305).** During the time between steps **301** and **310,** CPU **201** is free to execute other tasks while the computing elements **209** execute the steps **301** to **310** and supply (step **317)** processing results.

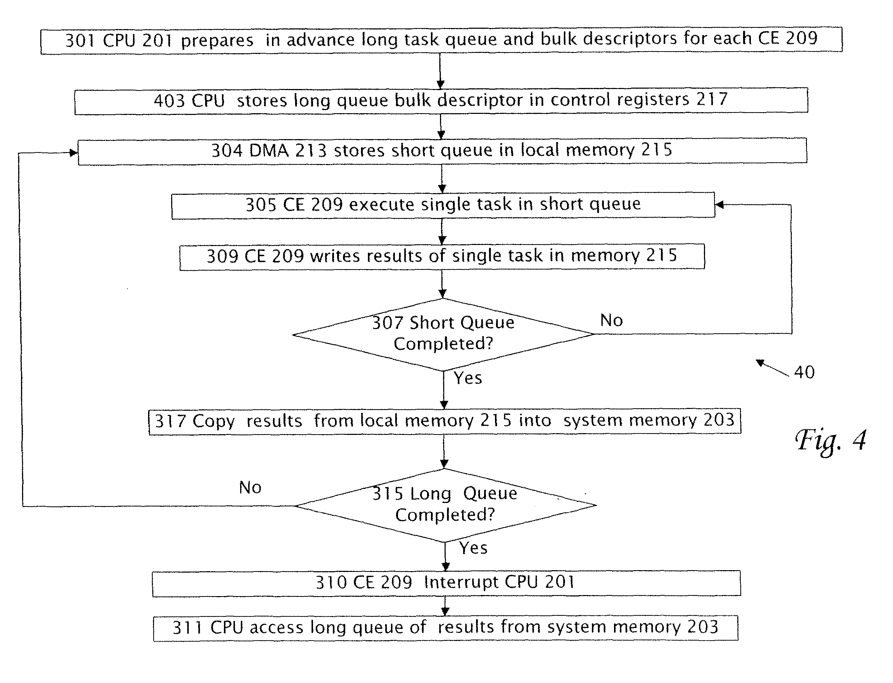

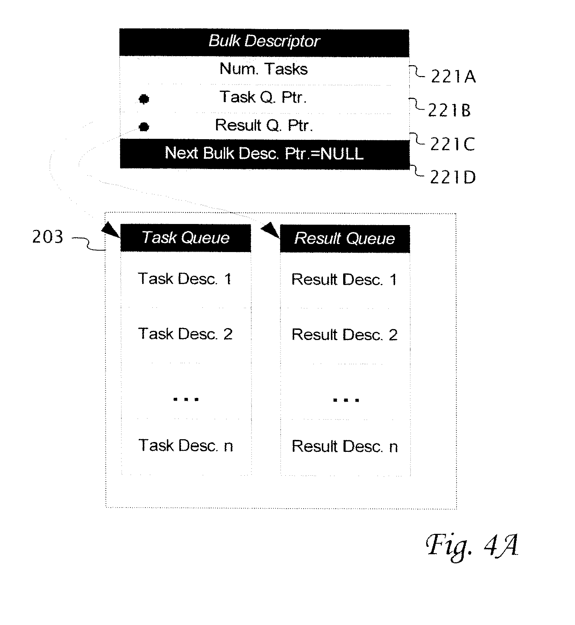

Reference is now made to Figure 4, a flow diagram of a method **40,** according to another embodiment of the present invention. As in method **30,** in step **301,** CPU **201,** prepares, in advance, multiple long queues of tasks which need to be executed respectively by computing elements **209.** The long queues are stored in system memory **203** along with task queue information referencing the long queues. CPU **201** stores (step **403)** bulk descriptor **221** directly into the control registers **217.** Reference is now also made to Figure 4A, illustrating bulk descriptor **221** programmed into control register **217** with fields **221A-C** and next bulk descriptor pointer **221D** loaded with a null value. The number of tasks field **221A** includes the number of tasks of the long queue. DMA **213** retrieves a short queue of tasks to be stored (step **304)** in local memory **215.** Computing element **209** then executes (step **305)** the first or next task in the short queue. Upon completion (step **305)** of a task, computing element **209** writes the results (step **309)** of the task in a result descriptor, typically overwriting in local memory **215** the task descriptor of the task just executed. When the execution of the short queue is completed (decision block **307**), the results are preferably written (step **317)** by DMA **213** from local memory **215** to system memory **203.** Computing element **209** checks if the long queue has been completed (decision box **315**). If there are still further tasks in the long queue, in step **304,** DMA **213** stores the next short queue in local memory **215.** If the long queue has been fully executed (decision box **315),** the results may be accessed (step **311).** CPU **201** accesses (step **311**) the results from system memory **203** either directly or through system DMA **205.** Alternatively, in the case that CPU **201** programmed computing element **209** to execute only one short queue of tasks, accessing results (step **311)** may be performed directly by CPU **201** accessing memory **215.**

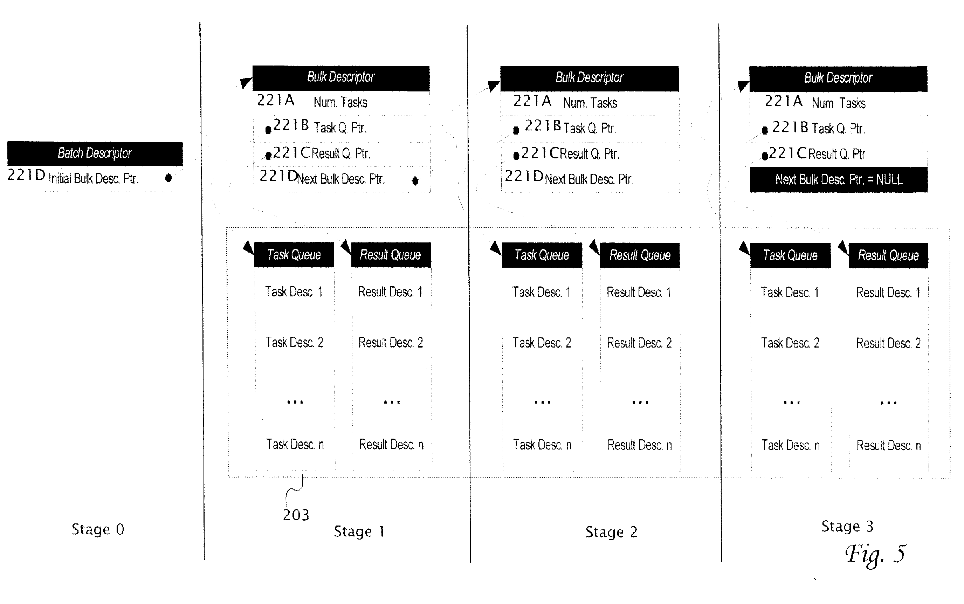

Reference is now made to Figure 5 which illustrates the use of the bulk descriptors **221** while performing method **30** according to an embodiment of the present invention. A linked list of bulk descriptors **221** is stored in memory **203.** Field **221D** is loaded at Stage 0 by CPU **201** with a batch descriptor pointer using the next bulk pointer **221D** of standard bulk descriptor **221** pointing in memory **203** to the first (Stage 1) bulk descriptor **221.** The first bulk descriptor, i.e. fields **221A - C,** is loaded together with the next bulk descriptor pointer **221D** at each of stages 1-2. At each of stages 1-3 DMA **213** accesses memory **203** and copies a long queue of task descriptors - in quantities of short queue lengths - into local memory **215.** At stage 3, the next bulk descriptor pointer is set to NULL indicating that Stage 3 includes the final long queue of the batch.

The use of batch mode, method **30,** allows for task queues to be stored non-contiguously in system memory **203,** and hence simplifies memory allocation. The use of batch mode further allows for CPU **201** to initialize execution (step **305**) of computing element **209** after preparing the first bulk transfer (Stage 1) of tasks, while CPU **201** then arranges further bulk transfers (stages 2 and 3) in the batch transfer.

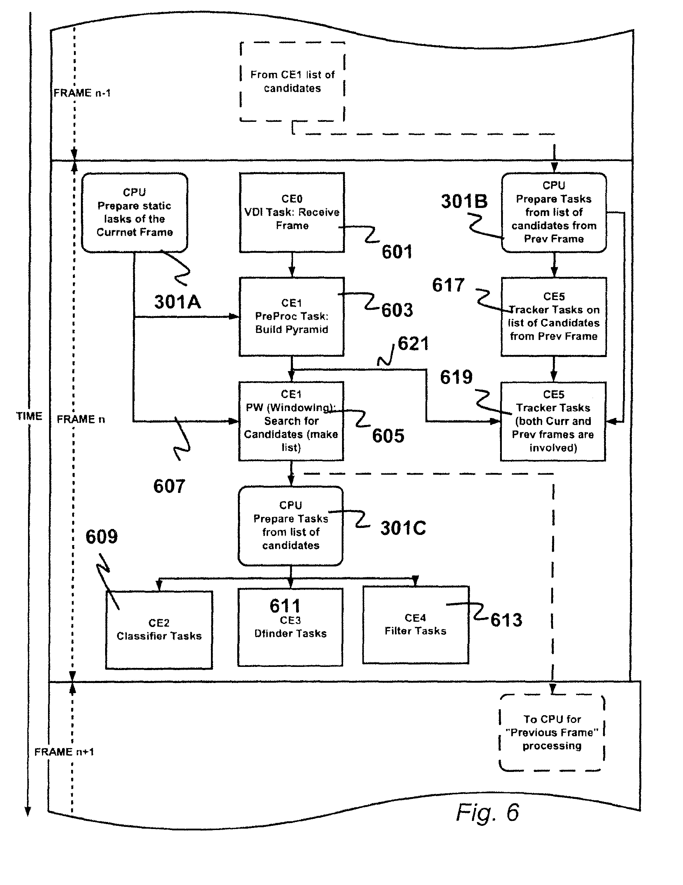

Reference is now made to Figure 6, which is a flow diagram illustrating parallel processing in an image processing system, according to an embodiment of the present invention. The system of Figure 6 includes CPU **201** and multiple computing elements **209** CEO-CE5. The system is attached to a digital camera which provides multiple image frames for the processing. Three image frames, Frame (n-1), Frame (n) and Frame (n+1) are shown in the flow diagram of Figure 6. Control flow is shown (axis on left) from top to bottom where time is divided into three primary blocks indicating processing during Frame (n-1), Frame (n), and Frame (n+1). The complete flow for one frame is shown in Frame (n), the previous and subsequent frames are included due to the interdependencies between frames. Note also the steps of the process are labeled with one of CPU **201** or CEO-CE5 indicating which of computing elements **209** is performing the process step.

Referring to the process steps within Frame (n), an image frame is received by computing element CE0 which typically receives (step **601)** Frame (n) from a video interface connected to the camera (not shown) and stores Frame (n) in system memory **203** preferably using system DMA **205.** After image Frame (n) is received (step **601),** various processing units are programmed with task queues (step **313,** Figures 3 and 4), some in parallel and some in sequence. In step **301A,** CPU **201** prepares tasks related to the current frame. Specifically, computing element CE1 is tasked (step **603)** with pre-processing the image frame for instance by preparing an image of smaller size or an image of reduced resolution. Computing element CE1 performs in step **605** a windowing procedure which results in the creation of candidate images. CE1 writes (step **607**) into system memory 203 preferably using local DMA **213** the list of candidate images (objects of interest) within image Frame (n). CPU **201** reads the candidate images from system memory **203**, (preferably using system DMA 205) and based on the candidate images prepares tasks preferably in parallel (step **301C**) for computing elements **209** CE2, CE3 and CE4. Specifically, computing element CE2 is tasked with classifying (step **609**) candidate images against known images. An example of classifying includes distinguishing between streetlights and headlights as objects in the environment of a moving vehicle. Computing element CE3 is tasked with stereo processing (step **611**) using image Frame (n) and another image frame input from a second camera (not shown in Figure 6) and CE4 is tasked with performing spatial filtration (step **613**) of one or more of the image candidates.

In parallel with the process steps previously described, in step **301B** CPU **201** prepares tasks based on a list of candidates from previous Frame (n-1) for computing element CE5 **209**. Computing element CE5 **209** is activated (step **313**, Figure 3) to process (step **617**) previous Frame (n-1) and process (step **619**) current Frame (n) and previous frame (n-1) together as CE5 performs "tracking" which involves comparisons between images taken from frame to frame over time.

CE5 processes (step **617**) image candidates from previous Frame (n-1), in parallel, typically at the same time as step **603** preprocessing by CE1 of the current frame.

Once the current frame pre-processing results (from step **603**) are available (indicated to CPU **201** via interrupt (step **310**) from CE1), CPU **201** then activates (step **313**) the tracking tasks (step **619**) of CE5 during which images in the current and previous frames are compared. Note that step **619** is dependent on the results from step **603** and CPU **201** is programmed to wait until the results (step **621**) from step **603** are available before signaling (step 313) CE5 to proceed with step **619**.

It can be seen from this example in image processing that CPU **201**, sets up (step **301**) task queues in advance for multiple computing elements **209**, and is available to perform other tasks while computing elements **209** are performing intensive multiple computational tasks in parallel. System **20** is typically implemented in hardware as application specific integrated circuits (ASIC) or at least the computing elements **209** are typically implemented in hardware as application specific integrated circuits (ASIC) with the other system components being discrete components on a PCB.

Image processing systems, according to embodiments of the present invention are preferably implemented as a system on a chip (i.e., single ASIC). The architecture is unique and allows for a system scheduler to run in a most efficient manner not possible with standard system architectures including a CPU and other processors sharing a bus and system resources (*e.g*.., DMA, bus arbiter, memory).

While the teachings herein have been described with respect to a limited number of embodiments, it will be appreciated that many variations, modifications and other applications of the invention may be made.

The disclosures in United States patent application number 12/131,173, from which this application claims priority, and in the abstract accompanying this application are incorporated herein by reference.

## Claims

1. A method performed in a system including a central processing unit (CPU) operatively attached to and accessing a system memory; and a plurality of computing elements, wherein the computing elements each include a computational core, local memory, and a local direct memory access (DMA) unit, wherein the local memory and the system memory are accessible by the computational core using the local DMA unit, the method including the steps of:
(a) storing by the CPU in the system memory a plurality of task queues in one-to-one correspondence with the computing elements, wherein each of said task queues includes a plurality of task descriptors which specify a sequence of tasks for execution by the computing elements:
(b) upon programming said computing element with task queue information of said task queue, accessing the task descriptors of said task queue in the system memory;
(c) storing said task descriptors of the task queue in local memory of the computing element; wherein said accessing and said storing are performed using the local DMA unit of the computing element;
(d) executing the tasks of the task queue by the corresponding computing element, wherein said executing of the respective task queues is performed in parallel by at least two of said computing element; and
(e) interrupting respectively the CPU by the computing elements only upon fully executing all the tasks of the respective task queue.

2. The method, according to claim 1, including the step of:
(f) storing results of said executing in the system memory in a plurality of address locations as indicated by said task queue information, wherein said storing of said results is performed by the local DMA unit of the computing element.

3. The method, according to claim 1 or 2, wherein the local memory of the computing element has insufficient capacity for storing simultaneously all the task descriptors of the task queue, wherein said accessing, said storing and said executing of said task queue are performed portion-by-portion, and upon generating results of said executing of a portion of said task queue, storing said results of said executing in a plurality of address locations of the local memory which previously stored the task descriptors already executed within said portion of said task queue.

4. The method, according to any preceding claim, wherein the task queue is part of a batch of task queues for execution by the computing element, said task queue information further including a pointer to the next task queue in the batch.

5. The method, according to any preceding claim, including the steps of, prior to said accessing:
(f) providing each of the computing elements with a plurality of control registers;
(g) loading said control registers with said task queue information including: (i) the number of tasks in the task queue, and (ii) a pointer in system memory to where said task descriptors reside.

6. The method, according to claim 5, wherein said task queue information includes: (iii) a results queue pointer which points to a location in the system memory for storing results of said executing.

7. A system including:
(a) a central processing unit (CPU);
(b) a system memory operatively attached to and accessed by said CPU; and
(c) a plurality of computing elements, wherein said computing elements each include a computational core, local memory, and a local direct memory access (DMA) unit, wherein said local memory and said system memory are accessible by said computational core using said local DMA units,
wherein said CPU stores in said system memory a plurality of task queues in one-to-one correspondence with said computing elements, wherein each task queue includes a plurality of task descriptors which specify a sequence of tasks for execution by said computing element,
wherein upon programming said computing element with task queue information of said task queue, said task descriptors of said task queue are accessed in system memory using said local DMA unit of said computing element,
wherein said task descriptors of said task queue are stored in local memory of said computing element using said local DMA unit of said computing element,
wherein said tasks of said task queue are executed by said computing element and at least two of said computing elements process respective task queues in parallel, and
wherein said CPU is interrupted by said computing elements only upon fully executing said tasks of said respective task queue.

8. The system, according to claim 7, including:
(d) a plurality of control registers, wherein said control registers are loaded with said task queue information including: (i) the number of tasks in the task queue; and (ii) a pointer in system memory to where said task descriptors reside.

9. The system, according to claim 8, wherein said task queue information includes: (iii) a results queue pointer which points to a location in the system memory for storing results of said execution.

10. An image processing system for processing in real time multiple image frames, the system including:
(a) a central processing unit (CPU);
(b) a system memory operatively attached to and accessed by said CPU; and
(c) a plurality of computing elements, wherein said computing elements each include a computational core, local memory, and a local direct memory access (DMA) unit, wherein said local memory and said system memory are accessible by said computational core using said local DMA unit,
wherein said CPU stores in said system memory a plurality of task queues in one-to-one correspondence with said computing elements, wherein each task queue includes a plurality of task descriptors which specify a sequence of tasks for execution by said computing element,
wherein upon programming said computing element with task queue information of said task queue, said task descriptors of said task queue are accessed in system memory using said local DMA unit of said computing element,
wherein said task descriptors of said task queue are stored in local memory of said computing element using said local DMA unit of said computing element,
wherein said tasks of said task queue are executed by said computing element and at least two of said computational cores process respective task queues in parallel,
wherein said CPU is interrupted by said computing elements only upon fully executing said tasks of said respective task queue,
wherein at least one of the computing elements is programmed to classify an image portion of one of the image frames as an image of a known object, and
wherein another of the computing elements is programmed to track said image portion in real time from the previous image frame to the present image frame.

11. The system, according to claim 10, wherein another of the computing elements is programmed for receiving the image frames and storing the image frames in real-time in the system memory.

12. The system, according to claim 10 or 11, wherein another of the computing elements is programmed for real-time reduced resolution image generation.

13. The system, according to claim 10, 11 or 12, wherein another of the computing elements is programmed for real-time stereo processing of the multiple image frames simultaneously with another set of multiple image frames.

14. The system, according to claim 10, 11, 12 or 13, wherein another of the computing elements is programmed for real-time spatial filtration of at least a portion of one of the image frames.

15. The system, according to any one of claims 10 to 14, wherein said computing elements are implemented as application specific integrated circuits (ASIC).
